# EUROPÄISCHE PATENTSCHRIFT

(11) **EP 0 629 384 B1**
(45) Veröffentlichungstag und Bekanntmachung des Hinweises auf die Patenterteilung: **27.11.1996**
(21) Anmeldenummer: 93810425.4
(22) Anmeldetag: 14.06.1993
(51) Int. Cl.: A61C 8/00

(54) **Vorrichtung zur Befestigung eines künstlichen Zahnersatzes an einem Kieferknochen**
Device for fixing a dental prosthesis to a jaw bone
Dispositif de fixation d'une prothèse dentaire sur un os de la machoire

(43) Veröffentlichungstag der Anmeldung: 21.12.1994
(73) Patentinhaber: INSTITUT STRAUMANN AG, CH-4437 Waldenburg (CH)
(72) Erfinder: Sutter, Franz, Dr. h. c., CH-4435 Niederdorf (CH); Mundwiler, Ulrich, CH-4456 Tenniken (CH)
(74) Vertreter: Ullrich, Gerhard, Dr.

(56) Entgegenhaltungen:
- DE-A- 2 413 883
- GB-A- 2 063 680
- US-A- 4 976 739
- US-A- 5 110 292

## Beschreibung

Die Erfindung betrifft eine Vorrichtung zur Befestigung eines künstlichen Zahnersatzes an einem Kieferknochen. Eine Befestigungs - Vorrichtung, welche sämtliche Merkmale des Oberbegriffs von Anspruch 1 aufweist, ist aus der US-A-4 976 739 bekannt.

Eine derartige Vorrichtung kann beispielsweise zur Befestigung eines Zahnersatzes dienen, der aus einem einzelnen, künstlichen, üblicherweise aus mehreren Teilen aufgebauten Zahn besteht. Es können jedoch auch zwei oder mehr Vorrichtungen der genannten Gattung in ein und denselben Kieferknochen eingesetzt werden und dann zusammen einen Zahnersatz halten, der eine Gruppe von zwei oder mehr künstlichen Zähnen, und nämlich beispielsweise eine sogenannte Brücke oder eine ganze Gebiss-Prothese bildet.

Unter der Handelsmarke BONEFIT bekannte Vorrichtungen besitzen zwei lösbar miteinander verbindbare Teile, nämlich einen im Kieferknochen verankerbaren Sockel, der auch als Implantat oder Primärteil bezeichnet wird, und einen zum Halten des des Zahnersatzes dienenden Halter, der auch als Sekundärteil bezeichnet wird. Der Sockel ist länglich und hat ein axiales Sackloch, das in die dem Zahnersatz zugewandte Stirnseite des Sockels mündet und dort eine von einer Ringfläche umschlossene Mündung hat. Das Sackloch weist einen mit einem Innengewinde versehenen Abschnitt und eine sich von diesem weg zur Stirnseite hin erweiternde, konische Erweiterung auf. Der Halter hat einen Innenteil mit einem ein Aussengewinde aufweisenden Gewindeteil und mit einer sich von diesem weg konisch erweiternden Verdickung. Der Halter hat ferner einen an das dickere Ende der Verdickung anschliessenden Aussenteil. Bei zusammengebauter Vorrichtung befindet sich der Innenteil des Halters im Loch des Sockels, wobei der Gewindeteil des Halters mit dem Innengewinde des Sockels verschraubt ist und die konische Verdickung des Halters fest in der konischen Erweiterung des Sockels sitzt. Der Aussenteil des Halters befindet sich dann ausserhalb des Sockels und kann in einen Zahnersatz hineinragen und diesen tragen sowie festhalten. Der sich unmittelbar über der Stirnseite des Sockels befindende Abschnitt des Halters ist bei den bekannten BONEFIT-Vorrichtungen normalerweise zylindrisch oder leicht konisch und bildet zusammen mit der auf der Stirnseite des Sockels vorhandenen, geneigten Ringfläche eine Schulter oder Kehle.

Die BONEFIT-Vorrichtungen haben sich recht gut für Verwendungen bewährt, bei denen die Stirnseite des Sockels ungefähr bündig mit der dem Kieferknochen abgewandten Oberfläche der Gingiva - d.h. des Zahnfleisches - ist oder ein wenig aus dem Zahnfleisch herausragt und sich in einer supragingivalen Lage befindet und bei denen ein künstlicher Zahnersatz auf der Schulter bzw. Kehle aufliegt. Wenn der Halter jedoch zum Beispiel einen Kugelkopf zum Anklipsen einer Gebiss-Prothese aufweist, kann zwischen dieser und der Schulter ein Zwischenraum vorhanden sein. Die auf die Gebiss-Prothese ausgeübten Querkräfte und sonstigen Kräfte müssen dann ausschliesslich durch den Gewindeteil und die konische Verdickung des Halters bzw. Sekundärteils auf den Sockel bzw. Primärteil übertragen werden, was unerwünscht grosse lokale Beanspruchungen verursachen kann. Zudem kann das Zahnfleisch die Schulter oder Kehle überwachsen, so dass unter Umständen schlecht reinigbare Taschen entstehen, in denen sich Bakterien entwickeln können. Ferner und vor allem wäre es in verschiedenen Problem-Fällen vorteilhaft, den Sockel nach dem Einsetzen während einer gewissen Heilungs-Zeitdauer vollständig mit der Gingiva zu bedecken. Um ein Zudecken der Sockel zu ermöglichen, können diese selbstverständlich so tief in den Kieferknochen eingesetzt werden, dass ihre Stirnseiten ungefähr bündig mit dem Kamm des Kieferknochens sind, und dann vorübergehend mit einer Verschluss-Schraube verschlossen werden. Wenn man nach der Heilungs-Zeitdauer die Gingiva wieder aufschneidet, die Verschluss-Schraube entfernt und den Halter in den Sockel einschraubt, befindet sich die genannte Schulter oder Kehle nach der Heilung der Gingiva unterhalb von dieser. Wenn der normalerweise von einem Zahntechniker hergestellte künstliche Zahnersatz dann nicht sehr genau und spaltlos auf die Schulter oder Kehle passt, besteht eine erhebliche Gefahr, dass bei der Schulter oder Kehle unter der Gingiva freie Hohlräume verbleiben, in denen sich Bakterien entwickeln. Diese können den Heilungsvorgang stören und Infektionen verursachen.

Im "Journal of Oral Implantology", Band XVI, 1990, No. 4, Seiten 297 - 301 ist eine Vorrichtung mit einem Sockel bzw. Implantat, einem Verbindungselement, einer Distanzhülse und einem Halter offenbart. Der Sockel ist gleich oder ähnlich ausgebildet wie bei den BONEFIT-Vorrichtungen. Das Verbindungselement besitzt einen dünneren sowie einen dickeren Gewindeteil mit je einem Aussengewinde, einen sich zwischen den beiden Gewindeteilen befindenden Konus und eine axiale Gewindebohrung. Die Distanzhülse hat ein durchgehendes axiales Loch mit einem Innengewinde. Der Halter hat einen Gewindeteil mit einem Aussengewinde.

Bei der Verwendung dieser Vorrichtung kann der Sockel derart in ein Loch des Kieferknochens eingesetzt werden, dass die Stirnseite des Sockels ungefähr bündig mit der Oberfläche des Kieferknochens ist. Nach der Heilung des Knochens kann man den dünneren Gewindeteil des Verbindungselements in den Sockel einschrauben, bis der Konus des Verbindungselements fest in der konischen Erweiterung des Lochs des Sockels sitzt. Danach kann man die Distanzhülse auf den aus dem Sockel herausragenden, dickeren Gewindeteil des Verbindungselements aufschrauben und den Gewindeteil des Halters in die Gewindebohrung des Verbindungselements einschrauben. Die Distanzhülse liegt dann fest an der Stirnseite des Sockels an.

Diese aus dem "Journal of Oral Implantology" bekannte Vorrichtung hat sich schon gut bewährt, hat jedoch den Nachteil, dass sie vier separate Teile aufweist, die zum Teil verhältnismässig komplizierte Formen haben und insbesondere viele Gewinde besitzen. Die Herstellung und das Zusammenbauen dieser Vorrichtung sind daher relativ aufwendig und kompliziert.

Der Erfindung liegt daher die Aufgabe zugrunde, eine Vorrichtung zu schaffen, die Nachteile der bekannten Vorrichtungen vermeiden kann und insbesondere bei stabiler Verbindbarkeit des Halters mit dem Sockel die Entwicklung von Bakterien in der Umgebung der Ausstrittstelle des Halters aus dem Sockel möglichst weitgehend verhindert, wobei die Vorrichtung kostengünstig herstellbar und einfach zusammenbaubar sein soll.

Diese Aufgabe wird durch eine Vorrichtung gelöst, die erfindungsgemäss die Merkmale des Anspruchs 1 aufweist. Vorteilhafte Ausgestaltungen der Vorrichtung gehen aus den abhängigen Ansprüchen hervor.

Der Sockel einer erfindungsgemässen Vorrichtung kann beispielsweise derart in einen Kieferknochen eingesetzt werden, dass seine Stirnseite ungefähr bündig mit der Oberfläche des Kieferknochens ist. Der Sockel kann dann nach dem Einsetzen in den Kieferknochen und bevor der Halter mit ihm verbunden wird, während einer gewissen Heilungs-Zeitdauer vollständig mit der Gingiva bedeckt werden. Eine solche vollständig subgingivale Anordnung des Sockels ist beispielsweise dann sehr vorteilhaft, wenn wegen eines Tumors des Kieferknochens ein Stück von diesem durch ein Transplantat - d.h. ein von einem anderen Knochen abgetrenntes Knochenstück - ersetzt und ein Sockel in ein solches Transplantat oder in einen stark atrophierten Kieferknochen eingesetzt wird. Die vollständige Bedeckung des Sockels durch die Gingiva trägt dann dazu bei, Infektionen zu vermeiden und eine rasche, vollständige Heilung des Kieferknochens sowie ein gutes Verwachsen von diesem mit dem Sockel zu ermöglichen.

Der Sockel kann jedoch auch derart in einen Kieferknochen eingesetzt werden, dass er aus diesem herausragt und die Gingiva nach deren Heilung mindestens im wesentlichen durchdringt, so dass die Stirnseite des Sockels ungefähr bündig mit der dem Kamm des Kieferknochens abgewandten Begrenzung der Gingiva ist oder sich ausserhalb dieser und also in supragingivaler Lage befindet.

Wenn der Halter einer erfindungsgemässen Vorrichtung mit dem Sockel verbunden ist, liegt er an der auf der Stirnseite des Sockels vorhandenen Ringfläche von diesem an. Der Halter kann dabei sowohl bei subgingivaler als auch bei supragingivaler Lage der Sockel-Stirnseite derart ausgebildet sein, dass er die Stirnseite des Sockels vollständig abdeckt und einen zur Achse der Vorrichtung rotationssymmetrischen Mantelflächenabschnitt hat, der beim äusseren Rand der Ringfläche des Sockels fugenlos sowie spaltlos an die Mantel- und/oder Aussenfläche des Sockels anstösst.

Bei einer für die subgingivale Anordnung des Sockels vorgesehenen Vorrichtung besteht der sich bei zusammengebauter Vorrichtung am nächsten bei der Stirnseite des Sockels befindende sowie an den äusseren Rand der Ringfläche des Sockels anstossende Mantelflächenabschnitt des Halters vorzugsweise aus einer die Gingiva vollständig durchdringenden, glatten, d.h. zwischen ihren Enden kantenlosen Fläche.

Der genannte Mantelflächenabschnitt des Halters kann beispielsweise - insbesondere bei subgingivaler Lage der Stirnseite des Sockels - parallel zur Achse der Vorrichtung und zylindrisch sein. Der genannte Mantelflächenabschnitt kann jedoch - insbesondere bei supragingivaler Lage der Stirnseite des Sockels - auch konisch oder im Axialschnitt gebogen sein, wobei er dann bei seinem an den Sockel angrenzenden Ende mit der Achse der Vorrichtung einen vorzugsweise höchstens etwa 30° betragenden Winkel bildet.

Der an den äusseren Rand der Ringfläche des Sockels anschliessende Mantelflächenabschnitt des Sockels erweitert sich zum genannten Rand hin vorzugsweise trompetenförmig und bildet mit der die Mündung des Lochs des Sockels umschliessenden Ringfläche vorzugsweise einen stumpfen oder eventuell ungefähr rechten Winkel. Der bei zusammengebauter Vorrichtung an den äusseren Rand der Ringfläche des Sockels anstossende Mantelflächenabschnitt des Halters bildet mit der Ringfläche des Sockels und einer an dieser anliegenden Anschlagfläche des Halters vorzugsweise einen spitzen Winkel. Die Summe der beiden genannten Winkel beträgt vorzugsweise mindestens 135°, noch besser mindestens 150° und vorzugsweise höchstens 180°. Wenn die Summe der beiden Winkel 180° beträgt, schliessen die aneinanderstossenden Mantelflächenabschnitte des Sockels und des Halters im Axialschnitt dann stetig aneinander an.

Der Erfindungsgegenstand wird nun anhand in der Zeichnung dargestellter Ausführungsbeispiele erläutert. In der Zeichnung zeigt
die Fig. 1 einen Schnitt durch einen Kieferknochen und einen in diesen eingesetzten Sockel einer Vorrichtung zur Befestigung eines künstlichen Zahnersatzes, wobei über dem Sockel noch eine zum Verschliessen von dessen Loch dienende Schraube gezeichnet ist,
die Fig. 2 einen Schnitt durch den in der Fig. 1 ersichtlichen Kieferknochen sowie Sockel und durch einen in diesen eingeschraubten Halter sowie eine sich im Loch befindende Hülse,
die Fig. 3 eine separate, teils im Schnitt und teils in Ansicht gezeichnete Darstellung der Hülse,
die Fig. 4 eine Draufsicht auf das sich in den Figuren 2 sowie 3 oben befindende Ende der Hülse,
die Fig. 5 einen der Fig. 2 entsprechenden Schnitt durch eine Vorrichtung mit einer anders ausgebildeten Hülse,
die Fig. 6 einen der Fig. 2 entsprechenden Schnitt durch eine Vorrichtung mit einer noch anders ausgebildeten Hülse,
die Fig. 7 eine teils in Ansicht, teilt im Schnitt gezeichnete Vorrichtung, deren Halter einen Mehrkant-Zapfen zum Halten des Zahnersatzes besitzt,
die Fig. 8 eine teils in Ansicht, teils im Schnitt gezeichnete Vorrichtung, deren Halter einen Kugelkopf besitzt,
die Fig. 9 eine Darstellung einer anderen Vorrichtung mit einem Kugelkopf,
die Fig. 10 eine Vorrichtung, deren Halter ein Magnetkupplungselement enthält und
die Fig. 11 eine Vorrichtung mit einem zum Anlöten eines Zahnersatzes ausgebildeten Halter.

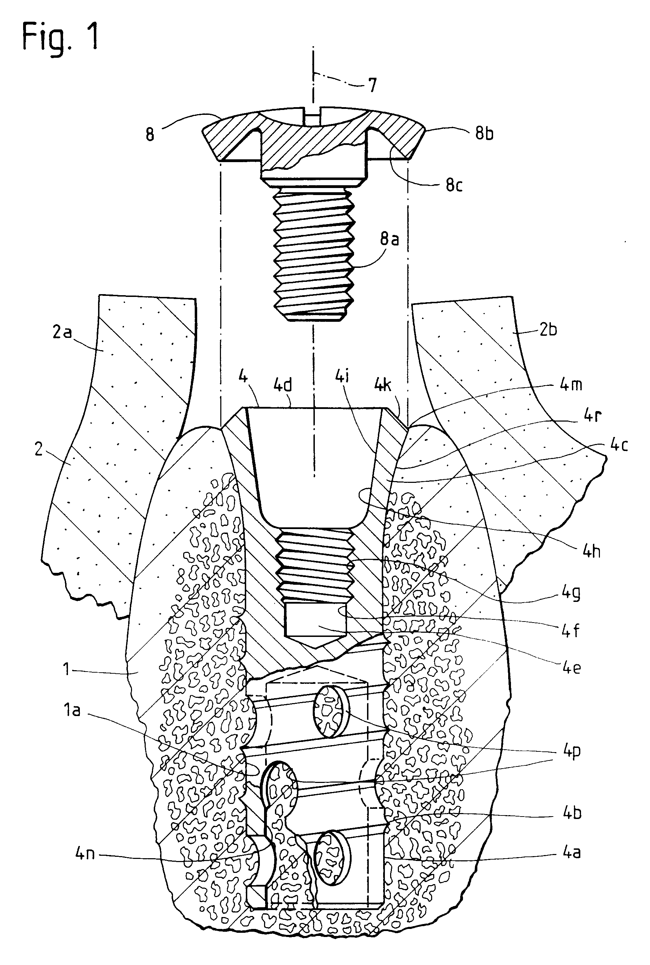

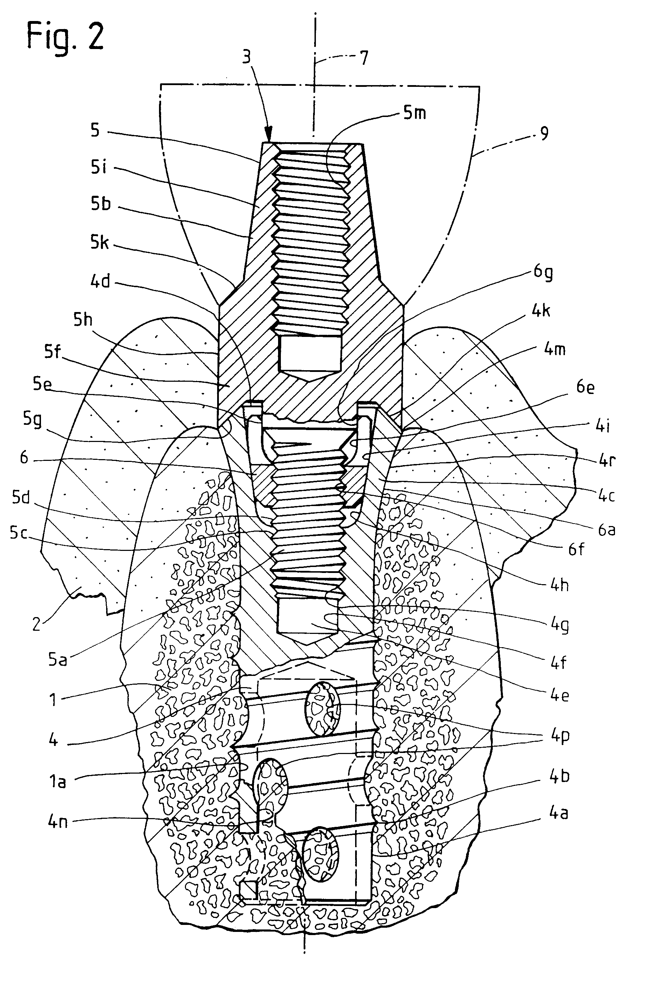

In den Figuren 1 und 2 ist ein Kieferknochen 1 mit einem in dessen Kamm mündenden Loch 1a ersichtlich. Das Loch 1a ist als Sackloch ausgebildet und hat einen aus einer Ringnut bestehenden Grundabschnitt, an den eine im ganzen Kreisquerschnitt hohle, zylindrische Bohrung anschliesst. Zwischen dieser und der Mündung des Loches 1a ist eine sich zur Mündung hin erweiternde Erweiterung vorhanden, deren Begrenzungsfläche im Axialschnitt stetig gekrümmt ist. Der durch die Ringnut und die zylindrische Bohrung gebildete Abschnitt der Bohrung ist mit einem Innengewinde versehen.

In den Figuren 1 und 2 ist ferner die Gingiva 2 ersichtlich. Diese wird vor der Herstellung des Lochs 1a beim mit diesem versehenen Bereich des Kieferknochens derart aufgeschnitten, dass in der Figur 1 mit 2a und 2b bezeichneten Gingiva-Lappen weggeklappt werden können. Danach wird das Loch 1a durch Bohren und Fräsen hergestellt.

Eine in der Figur 2 als Ganzes mit 3 bezeichnete Vorrichtung zur Befestigung eines künstlichen Zahnersatzes weist drei lösbar miteinander verbundene Teile, nämlich einen auch in der Fig. 1 ersichtlichen, häufig als Primärteil oder Implantat bezeichneten Sockel 4, einen auch etwa als Sekundärteil bezeichneten Halter 5 und eine Hülse 6 auf. Bei fertig zusammengebauter Vorrichtung 3 sind deren drei genannte Teile im allgemeinen rotationssymmetrisch zu einer gemeinsamen Achse 7, die also sowohl die Achse der ganzen Vorrichtung als auch die Achse des Sockels, des Halters und der Hülse bildet.

Der längliche Sockel 4 hat einen zylindrischen Abschnitt 4a, der mit einem Aussengewinde 4b versehen ist. An den zylindrischen Abschnitt 4a schliesst ein sich von diesem weg trompetenförmig verdickender Abschnitt 4c an. Der diesen aussen begrenzende Mantelflächenabschnitt 4r ist im Axialschnitt gleich stetig gekrümmt, wie die Fläche, welche die erwähnte Erweiterung des Lochs 1a begrenzt. Der Mantelflächenabschnitt 4r des Abschnitts 4c bildet an seinem oberen, am stärksten gegen die Achse 7 geneigten Ende mit dieser einen höchstens 30° und beispielsweise etwa 15° bis 25° betragenden Winkel. Das sich in den Figuren 1 und 2 oben am freien Ende des sich verdickenden Abschnitts 4c befindende Ende des Sockels 4 bildet dessen Stirnseite 4d. Der Sockel 4 ist mit einem zur Achse 7 koaxialen Loch 4e versehen, das aus einem Sackloch besteht und in die Stirnseite 4d mündet. Das Loch 4e hat einen zylindrischen Grundabschnitt 4f, der mindestens in einem Teilbereich mit einem Innengewinde 4g versehen ist und also eine Gewindebohrung bildet. Das Loch 4e besitzt zwischen dem Innengewinde 4g und der Stirnseite 4d eine sich zu dieser hin erweiternde Erweiterung 4h die mindestens zum grössten Teil durch eine konische Innenfläche 4i begrenzt ist, die mit der Achse 7 einen vorzugsweise mindestens 5° und vorzugsweise höchstens 15° betragenden Winkel bildet. Die Stirnseite 4d ist durch eine die Mündung des Lochs 4e umschliessende Stirnfläche gebildet, die mindestens zum grössten Teil aus einer von der Achse 7 weg nach aussen konisch zu dem der Stirnseite 4d abgewandten Ende des Sockels hin geneigten Ringfläche 4k besteht. Der äussere Rand 4m von dieser bildet auch den Aussenrand der Stirnseite 4d. Der Neigungswinkel zwischen der konischen Ringfläche 4k und der Achse 7 beträgt etwa 20° bis 70° und nämlich zum Beispiel ungefähr 45°. Die Ringfläche 4k bildet mit dem an ihren äusseren Rand 4m anschliessenden Ende des im Axialschnitt gekrümmten Mantelflächenabschnitts 4r einen stumpfen Winkel. Der zylindrische Abschnitt 4a des Sockels 4 besitzt noch ein zur Achse 7 koaxiales Loch 4n, das aus einer Sackbohrung besteht und in das der Stirnseite 4d abgewandte Ende des Sockels 4 mündet. Der zylindrische Abschnitt 4a ist zudem mit einigen seinen Mantel durchdringenden und in das Loch 4n mündenden Löchern 4p versehen. Der Sockel 4 besteht aus einem einstückigen Körper aus einem metallischen Material, nämlich Titan. Der zylindrische Abschnitt 4a ist zum Beispiel noch mit einem durch ein Plasma-Beschichtungsverfahren aufgebrachten, ebenfalls aus Titan bestehenden Überzug versehen.

Der längliche, einstückige, metallische, beispielsweise aus Titan bestehende Halter 5 hat einen Innenteil 5a und einen Aussenteil 5b. Wenn der Halter 5 bei zusammengebauter Vorrichtung gemäss der Fig. 2 mit dem Sockel 4 verbunden ist, befindet sich der Innenteil 5a im Loch 4e des Sockels 4, während der Aussenteil 5b ausserhalb des Sockels 4 angeordnet ist. Der Innenteil 5a hat einen Gewindeteil 5c mit einem Aussengewinde 5d und eine zur Achse 7 rotationssymmetrische, im wesentlichen zylindrische Verdickung 5e, deren Durchmesser ein wenig grösser als der Aussendurchmesser des Aussengewindes 5d ist. Die Verdickung 5e ist an ihrem dem Gewindeteil 5c zugewandten Ende mit einer kleinen Anschrägung versehen. Der Aussenteil 5b besteht aus einem an die Verdickung 5c anschliessenden, noch dickeren Abdeckabschnitt 5f. Dieser ist auf seinem dem Sockel 4 zugewandten Ende durch eine Ringfläche begrenzt, von der mindestens der äusserste Teil als konische Anschlagfläche 5g dient. Diese bildet mit der Achse 7 den gleichen Winkel wie die Ringfläche 4k des Sockels 4 und liegt bei zusammengebauter Vorrichtung an der Ringfläche 4k an. Der Aussenrand der Anschlagfläche 5g und der an diesen Aussenrand anschliessende, zylindrische Mantelflächenabschnitt 5h des Abdeckabschnitts 5f haben den gleichen Durchmesser wie der Aussenrand 4m der Ringfläche 4k. Der Mantelflächenabschnitt 5h bildet mit der Anschlagfläche 5g und bei zusammengebauter Vorrichtung auch mit der Ringfläche 4k des Sockels 4 einen spitzen Winkel. Die Summe von diesem und dem von den Flächen 4k sowie 4r des Sockels gebildeten, stumpfen Winkel liegt zwischen 135° und 180° und beträgt beispielsweise mindestens 150°. An den Abdeckabschnitt 5f schliesst ein sich von diesem weg verjüngender, konischer Endabschnitt 5i an. Dessen konische Mantelfläche ist bei ihrem weiteren Ende durch eine ebenfalls konische Schulterfläche 5k mit dem zylindrischen Mantelflächenabschnitt 5h des Abdeckabschnitts 5f verbunden und bildet mit der Schulterfläche 5k zusammen eine im Axialschnitt stumpfwinklige Schulter. Die Länge des zylindrischen Mantelflächenabschnitts 5h und der Abstand der Schulterfläche 5k von der Anschlagfläche 5g beträgt vorzugsweise mindestens 2 mm, vorzugsweise bis etwa 5 mm und beispielsweise ungefähr 3 mm. Der Halter 5 ist noch mit einer axialen Sack-Gewindebohrung 5m versehen, die in das freie Ende des Endabschnitts 5i mündet.

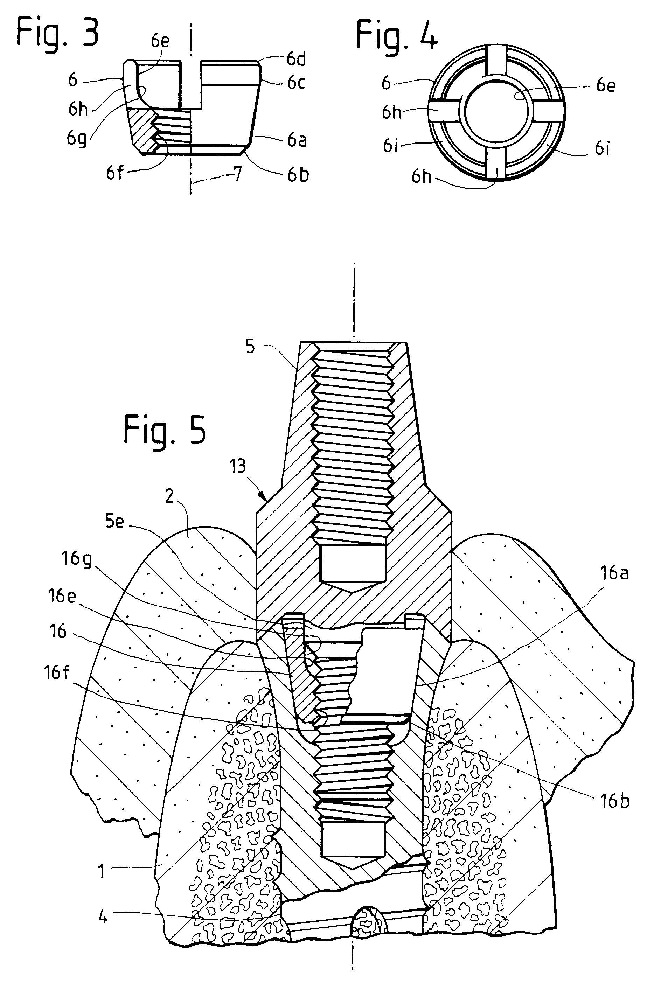

Die noch separat in den Figuren 3 und 4 gezeichnete, einstückige, metallische, beispielsweise aus Titan bestehende Hülse 6 hat in ihrem mittleren Bereich eine sich in den Figuren 2 und 3 nach oben erweiternde, konische Aussenfläche 6a, die mit der Achse 7 den gleichen Winkel bildet wie die konische Innenfläche 4i des Sockels 4. An das sich in den Figuren 2 und 3 unten befindende Ende der konischen Aussenfläche 6a schliesst eine sich zum unteren Ende der Hülse 6 hin verjüngende, ebenfalls konische, aber mit der Achse 7 einen grösseren Winkel bildende Anschrägung 6b an. An das obere Ende der konischen Aussenfläche 6a schliesst eine zylindrische Aussenfläche 6c an, die den gleichen Durchmesser hat wie das weitere Ende der konischen Aussenfläche 6a. Auf das obere Ende der zylindrischen Fläche 6c folgt eine sich zum oberen Ende der Hülse hin verjüngende Anschrägung 6d. Die Hülse 6 besitzt ein durchgehendes axiales Loch 6e, dessen sich in den Figuren 2 und 3 unten befindender Abschnitt mit einem Innengewinde 6f versehen ist. Das Loch 6e hat oberhalb des Innengewindes 6f eine Erweiterung 6g. Deren Begrenzung weist eine einen an das Innengewinde anschliessende, im Axialschnitt bogenförmige Übergangsfläche, oberhalb dieser durch eine zylindrische Innenfläche und zuoberst eine sich nach oben zur Mündung hin erweiternde Konusfläche auf. Der Durchmesser der zylindrischen Innenfläche ist ein wenig - beispielsweise ungefähr 0,01 mm bis 0,05 mm - kleiner als der Durchmesser der zylindrischen Fläche der Verdickung 5e des Halters 5. Im übrigen erstreckt sich die Erweiterung 6e von ihrem die obere Mündung des Lochs 6e bildenden Ende her bis in denjenigen Bereich der Hülse hinein, der aussen durch den oberen Endabschnitt der konischen Aussenfläche 6a begrenzt ist. Der die Erweiterung 6g umschliessende Abschnitt des Mantels der Hülse 6 ist durch zur Achse 7 parallele, in das obere Ende der Hülse mündende Schlitze 6h in mehrere, nämlich vier gleichmässig entlang dem Umfang der Hülse verteilte Segmente 6i unterteilt. Diese sind ein wenig elastisch deformierbar, so dass sie ausgehend von ihrer in entspanntem Zustand eingenommenen Stellung von der Achse 7 weggespreizt werden können.

Nun wird das Einsetzen und Zusammenbauen der Vorrichtung 3 erläutert.

Wenn die Gingiva 3 gemäss der Fig. 1 aufgeschnitten und der Kieferknochen 1 mit dem Loch 1a versehen wurde, wird der Sockel 4 in das Loch 1a eingesetzt und mit Hilfe eines Eindrehwerkzeugs in das Innengewinde des Lochs 1a eingeschraubt. Der Sockel 4 gelangt dabei in die in der Fig. 1 ersichtliche Stellung, in welcher sich der äussere Rand 4m der Ringfläche 4k ungefähr beim Mündungsrand des Lochs 1a befindet. Die Stirnseite 4d des Sockels 4 ragt dann beispielsweise geringfügig aus dem Loch 1a heraus und/oder ist mehr oder weniger genau bündig mit der das Loch 1a umschliessenden Oberfläche des Kieferknochens 1.

Eine in der Fig. 1 über dem Sockel 4 gezeichnete Verschluss-Schraube 8 hat einen in das Innengewinde 4g schraubbaren Gewindeteil 8a und einen Kopf 8b. Dieser besitzt auf seiner dem Sockel 4 zugewandten Seite eine konische Fläche 8c, die mit der Achse 7 den gleichen Winkel bildet wie die konische Ringfläche 4k und den gleichen Aussendurchmesser hat wie diese. Die Schraube 8 kann nach dem Einsetzen des Sockels 4 in den Kieferknochen 1 in das Loch 4e des Sockels 4 eingeschraubt werden, so dass sie mit ihrer konischen Fläche 8c auf der Ringfläche 4k des Sockels 4 aufliegt und das Loch 4e verschliesst. Die Gingive-Lappen 2a, 2b können dann über die Sockel 4 und die Schraube 8 gelegt und vernäht werden. Der Sockel und die Schraube können anschliessend während einer beispielsweise einige Monate betragenden Heilungs-Zeitdauer oder -Phase im Kieferknochen 1 belassen werden. Dieser kann dann heilen und gewissermassen mit dem Sockel 4 verwachsen sowie insbesondere auch dessen Löcher 4p in der in der Fig. 2 angedeuteten Weise durchwachsen. Während dieser Heilungs-Zeitdauer oder -Phase heilt selbstverständlich auch die Gingiva 2 und wächst über dem Sockel zusammen.

Nach Ablauf der vorgesehenen Heilungs-Zeitdauer oder -Phase kann die Gingiva 2 wieder aufgeschnitten und die Schraube 8 aus dem Sockel 4 herausgeschraubt werden. Die Hülse 6 wird vor dem Verbinden des Halters 5 mit dem Sockel 4 derart auf den Gewindeteil 5c des Halters 5 aufgeschraubt, dass die Hülse 6 sich noch näher beim freien Ende des Gewindeteils befindet als nachher bei fertig zusammengebauter Vorrichtung. Nun wird der aus dem unteren Ende der Hülse herausragende, freie Endabschnitt des Halter-Gewindeteils 5c mit Hilfe eines am Halter angreifenden Eindrehwerkzeugs in den mit dem Innengewinde 4g versehenen Abschnitt des Lochs 4e des Sockels 4 eingeschraubt. Die Hülse 6 wird bei diesem Einschraubvorgang solange mitgedreht, bis ihre konische Aussenfläche 6a fest an der konischen Innenfläche 4i des Sockels 4 anliegt, und bleibt dann in dieser axialen Position. Der Gewindeteil 5c kann noch tiefer in den Sockel 4 eingeschraubt werden, bis die konische Anschlagfläche 5g des Halters 5 an der Ringfläche 4k des Sockels 4 aufliegt. Die zylindrische Verdickung 5e des Halters 5 dringt spätestens im letzten Teil des Einschraubvorgangs in die Erweiterung 6g des Lochs 6e der Hülse 6 ein und spreizt die Segmente 6i der Hülse 6 von der Achse 7 weg nach aussen. Die einen Teil der äusseren Begrenzung der Segmente 6i bildende, ursprünglich zylindrische Aussenfläche 6c wird dabei ein wenig gegen die Achse 7 geneigt und erhält eine mehr oder weniger konische Form, ist jedoch in der Fig. 2 als Zylinderfläche gezeichnet. Durch die Spreizung der Segmente 6i werden deren Aussenflächen mindestens zum Teil zusätzlich an die konische Innenfläche 4i des Sockels 4 angepresst.

Am Aussenteil 5b des Halters 5 kann sofort nach dem Verbinden des Halters 5 mit dem Sockel 4 oder nach einer die Heilung der Gingiva 2 ermöglichenden Heilungsphase ein strickpunktiert und vereinfacht in der Fig. 2 angedeuteter, künstlicher Zahnersatz 9 befestigt werden. Der Endabschnitt 5i des Halters 5 kann dabei derart in den Zahnersatz 9 hineinragen, dass dieser auf der Schulterfläche 5k aufliegt. Im übrigen kann der Zahnersatz eine nicht gezeichnete, in der Gewindebohrung 5m festgeschraubte Schraube aufweisen.

Wenn der Sockel 4, der Halter 5 und die Hülse 6 gemäss der Fig. 2 zu einer Vorrichtung 3 zusammengebaut sind und der Gewindeteil 5c des Halters 5 durch das Loch 6e der Hülse 6 hindurch mit dem Innengewinde 4g des Sockels 4 verschraubt ist, sitzt die ebenfalls mit dem Gewindeteil 5c des Halters 5 verschraubte Hülse 6 fest in der Erweiterung 4h des Lochs 4e des Sockels 4 und liegt mit der konischen Aussenfläche 6a an der konischen Innenfläche 4i des Sockels an. Ferner liegt der Aussenteil 5b des Halters 5 mit der konischen Anschlagfläche 5g auf der konischen Ringfläche 4k des Sockels 4 auf.

Obschon bei der Fabrikation des Sockels 4, des Halters 5 und der Hülse 6 auch bei hoher Präzision gewisse Fabrikationsungenauigkeiten auftreten können, liegen bei zusammengebauter Vorrichtung beide konischen Flächen 4i und 4k des Sockels 4 satt und fest an den konischen Flächen 6a bzw. 5g der Hülse 6 bzw. des Halter 5 an. Zudem werden die durch den Halter 5 gespreizten Segmente 6i der Hülse 6 zwischen dem Halter und dem Sockel festgeklemmt. Der Halter 5 wird also sehr stabil mit dem Sockel 4 verbunden, wobei die Verbindung insbesondere sowohl grosse zur Achse 7 parallele Druckkräfte als auch grosse quer zur Achse 7 gerichtete Kräfte aufnehmen bzw. vom Halter auf den Sockel übertragen kann. Die zwischen den verschiedenen Teilen wirksamen Haftreibungs-, Druck- und Klemmkräfte gewährleisten insbesondere auch, dass sich der Halter nicht selbst vom Sockel 4 losschraubt.

Die konische Ringfläche 4k des Sockels 4 und die konische Anschlagfläche 5g des Halters sind vollkommen rotationssymmetrisch zur Achse 7 und um diese herum vollständig glatt, d.h. nicht durch Schlitze oder Nuten oder dergleichen unterbrochen. Die Flächen 4k, 5g liegen daher um die Achse 7 und die Mündung des Lochs 4e des Sockels 4 herum lückenlos aneinander an. Der Abdeckabschnitt 5f deckt zudem die sich unter der Gingiva 2 befindende Stirnseite 4d des Sockels 4 bis zum äusseren Rand 4m der Ringfläche 4k ab. Der Abdeckabschnitt 5f des Halters stösst beim Rand 4m des Sockels 4 im wesentlichen fugenlos sowie spaltlos an diesen an. Die Mantelflächenabschnitte 4r und 5h bilden bei der Stossstelle - d.h. beim Rand 4m - miteinander einen zwischen 135° sowie 180° liegenden und nämlich mindestens 150° betragenden Winkel. Durch diese Ausbildung des Abschnitts 4c des Sockels 4 und des diesen abdeckenden Abdeckabschnitts 5f des Halters kann zumindest weitgehend verhindert werden, dass in der Umgebung der Stirnseite 4d des Sockels beim Heilen und Zusammenwachsen der vorher aufgeschnittenen Gingiva 2 unter dieser Hohlräume entstehen, in denen sich Bakterien entwickeln können.

In der Fig. 5 sind ein Kieferknochen 1, eine Gingiva 2 und eine mit 13 bezeichnete Vorrichtung ersichtlich. Diese besitzt einen Sockel 4, der gleich oder ähnlich ausgebildet ist wie derjenige der in der Fig. 2 gezeichneten Vorrichtung 3. Der Halter 5 der Vorrichtung 13 kann ebenfalls gleich oder ähnlich ausgebildet sein wie derjenige der Vorrichtung 3 und besitzt insbesondere eine im wesentlichen zylindrische Verdickung 5e. Die Vorrichtung 13 besitzt jedoch eine Hülse 16, die anders ausgebildet ist als die Hülse 6 der Vorrichtung 3. Bei der Hülse 16 erstreckt sich die konische Aussenfläche 16a von der am unteren Ende der Hülse vorhandenen, konischen Anschrägung 16b bis zum oberen Ende der Hülse 16. Diese besitzt also keine der zylindrischen Aussenfläche 6c entsprechende Aussenfläche. Die Hülse 16 besitzt ein durchgehendes, axiales Loch 16e, das unten ein Innengewinde 16f und oben eine Erweiterung 16g besitzt, die zum Teil durch eine zylindrische Innenfläche begrenzt bzw. gebildet ist. Der Durchmesser dieser zylindrischen Innenfläche ist jedoch im Unterschied zum entsprechenden Durchmesser der Hülse 6 nicht kleiner als der Durchmesser der zylindrischen Verdickung 5e, sondern mindestens gleich diesem letztgenannten Durchmesser. Ferner sind bei der Hülse 16 auch keine den Schlitzen 6h entsprechenden Schlitze vorhanden, so dass der Mantel der Hülse 16 deren Achse überall lückenlos umschliesst.

Die Vorrichtung 13 kann bei ihrer Verwendung in analoger Weise zusammengebaut werden wie die Vorrichtung 3. Obschon die Hülse 16 der Vorrichtung keine den spreizbaren Segmenten 6i der Hülse 6 entsprechenden Segmente besitzt, ergibt sie noch eine stabile Verbindung des Halters mit dem Sockel. Da die Hülse 16 etwas einfacher ausgebildet ist als die Hülse 6, kann sie kostengünstiger hergestellt werden als die letztere. Im übrigen hat die Vorrichtung 13 ähnliche Eigenschaften wie die Vorrichtung 3.

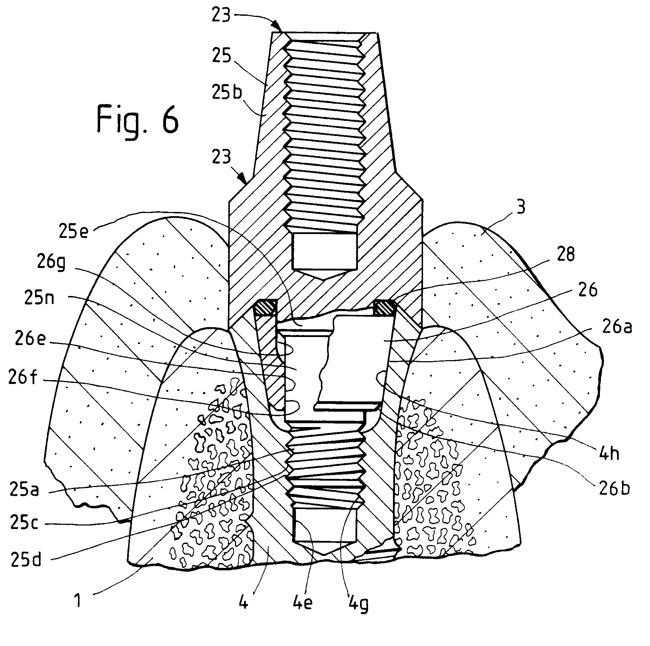

Die in der Fig. 6 gezeichnete Vorrichtung 23 besitzt einen Sockel 4, der wiederum gleich oder ähnlich ausgebildet ist wie bei der Vorrichtung 3 und insbesondere ein Loch 4e mit einem Innengewinde 4g sowie einer Erweiterung 4h besitzt. Der Halter 25 der Vorrichtung 23 hat einen Innenteil 25a sowie einen Aussenteil 25b. Der Innenteil 25a besitzt einen Gewindeteil 25c mit einem Aussengewinde 25d und eine im wesentlichen zylindrische Verdickung 25e. Der Halter 25 unterscheidet sich vom Halter 5 jedoch dadurch, dass das Aussengewinde 25d kürzer ist als das Aussengewinde 5d. Während sich das letztere beim Halter 5 annähernd bis zu dessen Verdickung erstreckt, ist beim Halter 25 zwischen dem Aussengewinde 25d und der Verdickung 25e noch ein gewindeloser Schaft 25n vorhanden, dessen Durchmesser beispielsweise gleich dem Nenn- oder Aussendurchmesser des Aussengewindes 25d oder nur ganz wenig grösser als der letztgenannte Durchmesser ist.

Die zur Vorrichtung 23 gehörende Hülse 26 hat eine konische Aussenfläche 26a die sich von einer am dünneren, unteren Ende der Hülse vorhandenen Anschrägung 26b bis zum oberen, weiteren Ende der Hülse 26 erstreckt. Die Hülse 26 hat ferner ein durchgehendes, axiales Loch 26e. Dieses besitzt anstelle des Innengewindes 6f der Hülse 6 einen glatten, d.h. gewindelosen, zylindrischen Abschnitt 26f. Dessen Durchmesser ist ungefähr gleich dem Durchmesser des Schafts 25n, so dass dieser satt oder mit höchstens sehr kleinem radialem Spiel in den zylindrischen Abschnitt 26f hineinpasst. Das Loch 26e hat oberhalb des Abschnitts 26f eine Erweiterung 26g. Diese ist zum Teil durch eine zylindrische Innenfläche gebildet, deren Durchmesser mindestens gleich dem Durchmesser der zylindrischen Verdickung 25e des Halters 25 ist. Im übrigen besitzt die Hülse 26 keine den Schlitzen 6h der Hülse 6 entsprechenden Schlitze.

Die Vorrichtung 23 kann eventuell zusätzlich noch einen gummielastischen Ring 28 aufweisen, der beispielsweise aus einem biokompatiblen, sterilisierbaren O-Ring bestehen kann. Dieser Ring 28 kann zwischen der die Mündung des Lochs 4e des Sockels 4 bedeckenden Fläche des Halters 5 und der dieser Fläche zugewandten, am weiteren Ende der Hülse 26 vorhandenen, radialen Ringfläche angeordnet werden.

Beim Zusammenbauen der Vorrichtung 23 kann man die Hülse 26 beispielsweise in noch vom Halter 25 getrenntem Zustand in die Erweiterung 4h des Lochs 4e des Sockels 4 hineindrücken und/oder leicht in die Erweiterung 4h hineinschlagen. Danach kann man den gummielastischen Ring 28 oben in die Erweiterung 4h einsetzen und den Gewindeteil 25c des Halter 25 durch die Hülse 26 hindurchschieben sowie in das Innengewinde 4g des Sockels einschrauben. Der aus der Verdickung 25e und dem Schaft 25n bestehende Abschnitt des Innenteils 25a durchdringt dann die Hülse 26. Die Hülse 26 liegt dann ferner mit ihrer konischen Aussenfläche 26a an der konischen Innenfläche der Erweiterung 4h an, sitzt fest in der letzteren und wird zudem durch den Ring 28 gegen nach oben gerichtete, axiale Verschiebungen gesichert. Im übrigen hat die Vorrichtung 23 ähnliche Eigenschaften wie die Vorrichtung 3.

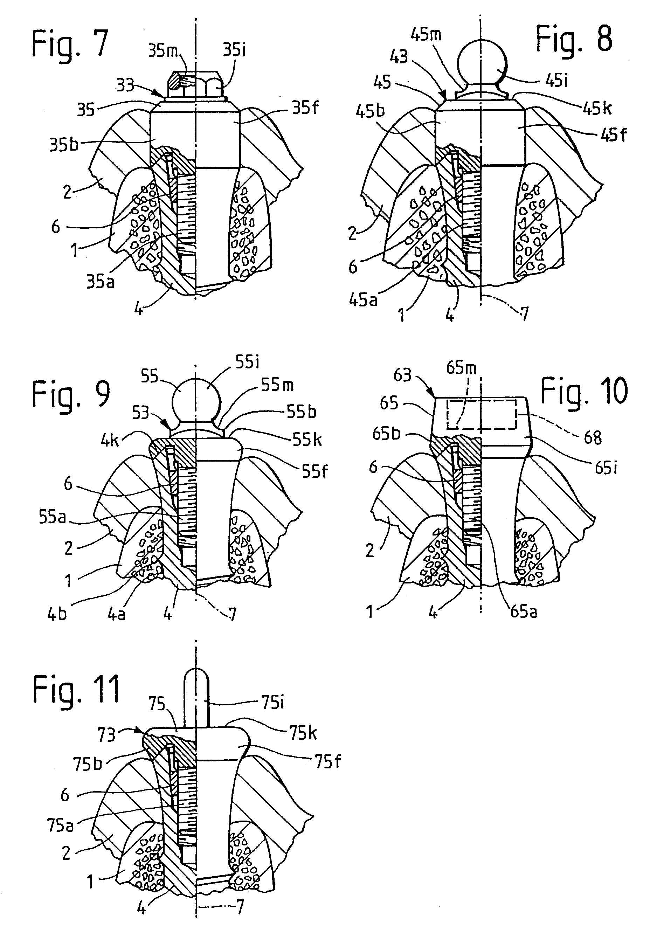

In der Fig. 7 sind Teile eines Kieferknochens 1, der Gingiva 2 und einer Vorrichtung 33 ersichtlich. Die letztere besitzt einen Sockel 4, einen Halter 35 und eine Hülse 6. Der Sockel 4, der Innenteil 35a des Halters 35 und die Hülse 6 sind gleich oder ähnlich ausgebildet wie bei der Vorrichtung 3. Dagegen ist der Aussenteil 35b des Halters 35 anders ausgebildet als Aussenteil 5b des Halters 5 und besitzt auf der dem Sockel 4 abgewandten Seite des zylindrischen Abdeckabschnitts 35f einen Endabschnitt mit einem Mehrkant-Zapfen 35i, der in einer axialen Ansicht beispielsweise ein regelmässiges Achteck bildet. Zwischen dem Abdeckabschnitt 35f und dem Mehrkant-Zapfen 35i ist eine sich zu diesem hin verjüngende und mit diesem zusammen eine Schulter bildende, konische Schulterfläche vorhanden. Im übrigen ist der Halter 35 mit einer in die Stirnfläche des Mehrkant-Zapfens mündenden Sack-Gewindebohrung 35m versehen.

In der Fig. 8 sind Teile eines Kieferknochens 1, der Gingiva 2 und einer Vorrichtung 43 gezeichnet. Deren Sockel 4 und Hülse 6 sind gleich wie bei der Vorrichtung 3 ausgebildet. Der Halter 45 der Vorrichtung 43 hat einen gleich wie bei der Vorrichtung 3 ausgebildeten Innenteil 45a. Der Aussenteil 45b des Halters 45 besitzt einen zylindrischen Abdeckabschnitt 45f und auf dessen dem Sockel 4 abgewandter Seite einen Kugelkopf 45i sowie einen diesen mit dem restlichen Halter verbindenden Hals 45m. Der Abdeckabschnitt 45f hat auf der dem Innenteil 45a abgewandten Seite eine den Hals 45m umschliessende, zusammen mit diesem eine Schulter bildende Schulterfläche 45k, die einen inneren, ebenen sowie zur Achse 7 rechtwinkligen Abschnitt und einen vom Kugelkopf weg nach aussen geneigten, beispielsweise konischen Abschnitt hat.

Bei den anhand der Figuren 1 bis 8 beschriebenen Vorrichtung ist der Sockel 4 vollständig subgingival angeordnet. Die in der Fig. 9 gezeichnete Vorrichtung 53 besitzt dagegen einen deutlich aus dem Kieferknochen herausragenden Sockel 4, der die Gingiva 2 nach deren Heilung mindestens im wesentlichen durchdringt, so dass die Stirnseite des Sockels 4 ungefähr bündig mit der dem Kieferknochen 1 abgewandten Begrenzung der Gingiva 2 ist und/oder sich ausserhalb der Gingiva befindet Der Sockel 4 der Vorrichtung 53 kann abgesehen von seiner anderen, transgingivalen Anordnung gleich wie die Sockel der Vorrichtungen 3, 13, 23, 33, 43 ausgebildet sein oder eventuell einen etwas längeren zylindrischen Abschnitt 4a und ein entsprechend längeres Aussengewinde 4b haben. Der Halter 55 der Vorrichtung 53 besitzt einen Innenteil 55a, der gleich wie beim Halter 5 ausgebildet ist. Der Aussenteil 55b des Halters 55 besitzt einen Abdeckabschnitt 55f und einen durch einen Hals 45m mit diesem verbundenen Kugelkopf 55i. Der Abdeckabschnitt 55f hat eine den Hals 55m umschliessende Schulterfläche 55k. Der Halter 55 besitzt also gleich wie der Halter 45 einen Kugelkopf, unterscheidet sich von diesem jedoch dadurch, dass sein Abdeckabschnitt 55f eine wesentlich kürzere axiale Abmessung hat als der Abdeckabschnitt des Halters 45. Zudem hat der Abdeckabschnitt 55f anstelle eines zylindrischen Mantelflächenabschnitts einen im Axialschnitt bogenförmigen Mantelflächenabschnitt, der an seinem sich beim äusseren Rand der konischen Ringfläche 4k des Sockels 4 befindenden Ende ungefähr stetig an die Mantelfläche des Sockels anschliesst und beim anderen Ende stetig in einen ebenen, zur Achse 7 rechtwinkligen Abschnitt der Schulterfläche 55k übergeht. Die Hülse der Vorrichtung 53 ist gleich wie bei der Vorrichtung 3 ausgebildet.

Die einen Kugelkopf 45i, 55i aufweisenden Vorrichtungen 43 bzw. 53 ermöglichen die Befestigung eines Zahnersatzes mit einem Verschlusselement, in das der Kugelkopf ähnlich wie bei einem Druckknopf-Verschluss lösbar eingerastet werden kann. Wenn an den Haltern 45, 55 ein in den Figuren 8, 9 nicht gezeichneter Zahnersatz lösbar angeklipst ist, kann zwischen diesem und der Schulterfläche 45k bzw. 55k beispielsweise ein spaltförmiger Zwischenraum vorhanden sein. Die Schulterflächen 45k, 55k können jedoch ohne weiteres so weit vom Kieferknochen entfernt sein, dass sie trotz des erwähnten Zwischenraums kaum von der Gingiva überwachsen werden und gut gereinigt werden können. Im übrigen sind die Halter 45, 55 - gleich wie es ausführlich für den Halter 5 erläutert wurde - stabil mit dem Sockel 4 verbunden.

Die in der Fig. 10 gezeichnete Vorrichtung 63 besitzt einen Sockel 4, einen Halter 65 und eine Hülse 6. Der Sockel 4 ist wiederum gleich oder ähnlich wie derjenige der Vorrichtung 3 ausgebildet, jedoch analog wie bei der Vorrichtung 53 derart in einen Kieferknochen 1 eingesetzt, dass er die Gingiva nach deren Heilung mindestens im wesentlichen durchdringt. Die Hülse 6 ist gleich ausgebildet wie bei der Vorrichtung 3.

Der Halter 65 besitzt einen gleich wie beim Halter 5 ausgebildeten Innenteil 65a. Der Aussenteil 65b des Halters 65 besitzt einen ungefähr stetig an die Mantelfläche des Sockels 4 anschliessenden, sich von diesem weg erweiternden Mantelflächenabschnitt und an seinem dem Sockel 4 abgewandten Ende einen sich zu seinem freien Ende hin beispielsweise leicht konisch verjüngenden Endabschnitt 65i, der auf seiner Stirnseite mit einer Ausnehmung 65m versehen ist. Diese enthält ein Magnetkupplungselement 68, das aus mindestens einem ursprünglich separaten, starr und vorzugsweise unlösbar mit dem restlichen Halter 65 verbundenen Körper besteht. Während der den eigentlichen Halter 65 bildende Körper aus unmagnetischem Titan besteht, ist das Magnetkupplungselement 68 ferromagnetisch und besitzt mindestens einen Permanentmagnet und/oder mindestens einen magnetisch weichen Körper. Der Halter 65 der Vorrichtung 63 dient zum Halten eines in der Fig. 10 nicht gezeichneten künstlichen Zahnersatzes, der ebenfalls ein ferromagnetisches Magnetkupplungselement aufweist, das in Zusammenwirkung mit dem Magnetkupplungselement 68 eine lösbare Verbindung des Zahnersatzes mit dem Halter 65 ermöglicht. Dabei muss mindestens eines der beiden zusammenwirkenden Magnetkupplungselemente einen Permanentmagnet aufweisen.

Die in der Fig. 11 ersichtliche Vorrichtung 73 hat einen aus einem Kieferknochen 1 herausragenden und die Gingiva 2 durchdringenden Sockel 4, eine Hülse 6 und einen Halter 75, wobei der Sockel 4, die Hülse 6 und der Innenteil 75a des Halters 75 gleich oder ähnlich ausgebildet sind wie bei der Vorrichtung 3. Der Aussenteil 75b des Halters 75 besitzt einen die Stirnseite des Sockels 4 abdeckenden Abdeckabschnitt 75f und an dessen dem Sockel abgewandten Ende eine mit der Achse 7 einen mindestens ungefähr rechten Winkel bildende Schulterfläche 75k sowie einen von dieser wegragenden, zur Achse 7 koaxialen Vorsprung oder Fortsatz 75i, der beispielsweise aus einem zylindrischen Stift besteht. Der Vorsprung oder Fortsatz 75i kann in einen nicht gezeichneten Zahnersatz hineinragen. Der Zahnersatz oder mindestens ein Teil von diesem kann auf der zusammen mit dem Vorsprung oder Fortsatz eine Schulter bildenden Schulterfläche 75k aufliegen und bei dieser am Halter 75 angelötet sein. Der Lötvorgang erfolgt vorzugsweise bei vom Sockel 4 getrennten Halter 75.

Die anhand der Figuren 1 bis 7 und 11 beschriebenen Vorrichtungen 3, 13, 23, 33, 73 können wahlweise zur Befestigung eines künstlichen Zahnersatzes verwendet werden, der nur einen einzigen künstlichen Zahn oder mehrere künstliche Zähne aufweist. Die einen Kugelkopf 45i, 55i oder ein Magnetkupplungselement 68 aufweisenden Vorrichtungen 43 bzw. 53 bzw. 63 sind vorgesehen, um zusammen mit mindestens einer andern gleichartigen Vorrichtung einen Zahnersatz mit mehreren Zähnen, d.h. eine Brücke oder eine Gebiss-Prothese lösbar zu befestigen.

Der in verschiedenen Figuren gezeichnete Kieferknochen 1 besteht aus einem Unterkieferknochen, aus dem die Vorrichtungen auf der oberen Seite herausragen. Die Vorrichtungen können jedoch auch in einen Oberkieferknochen eingesetzt werden und dann nach unten aus diesem herausragen.

Im übrigen kann einem Vorrichtungen verwendenden Zahnarzt oder Chirurgen ein Satz von unterschiedlich langen und dicken Sockeln 4 zur Verfügung gestellt werden, so dass der Zahnarzt bzw. Chirurg einen Sockel mit einer an die individuelle Beschaffenheit des Kieferknochens angepassten Länge und Durchmesser auswählen kann. Desgleichen können Halter 5 mit unterschiedlich langen Abdeckabschnitten 5f bereit gestellt werden, so dass ein Zahnarzt oder Chirurg einen Halter mit einer an die individuelle Dicke der Gingiva angepassten Länge des Abdeckabschnitts auswählen kann. Entsprechendes gilt auch für die Halter 25, 35, 45.

Beim Sockel 4 können das in dessen dem Halter abgewandtes Ende mündende axiale Loch 4n und die radialen Löcher 4p weggelassen werden. Ferner kann man beim Sockel 4 eventuell das Aussengewinde 4b weglassen. Des weiteren kann der Sockel ein wenig abgewinkelt sein, so dass die Achse des sich trompetenförmig erweiternden Abschnitts 4c und des Lochs 4e einen Winkel mit der Achse des der Stirnseite 4d abgewandten Endabschnitts des Sockels bildet.

Des weiteren können Merkmale verschiedener beschriebener Vorrichtungen miteinander kombiniert werden. Beispielsweise kann man einerseits bei der in der Fig. 5 gezeichneten Vorrichtung 13 noch einen dem gummielastischen Ring 28 der Vorrichtung 23 entsprechenden Ring vorsehen oder andererseits bei der Vorrichtung 23 den Ring 28 weglassen. Des weiteren könnten die Innenteile der Halter und die Hülsen der in den Figuren 7 bis 11 gezeichneten Vorrichtungen gleich oder ähnlich wie bei den Vorrichtungen 13 oder 23 ausgebildet werden.

## Patentansprüche

1. Vorrichtung zur Befestigung eines künstlichen Zahnersatzes (9) an einem Kieferknochen (1), mit einem zum Einsetzen in ein Loch (1a) des Kieferknochens (1) bestimmten, Sockel (4) und einem mit diesem verbindbaren, zum Halten des Zahnersatzes (9) ausserhalb des Kieferknochens (1) bestimmten Halter (5, 25, 35, 45, 55, 65, 75), wobei der Sockel (4) eine Stirnseite (4d), ein Loch (4e) mit einer sich auf der Stirnseite (4d) befindenden Mündung, mit einem Innengewinde (4g) sowie mit einer sich von diesem zur Stirnseite (4d) hin erweiternden, mindestens zum Teil durch eine konische Innenfläche (4i) begrenzten Erweiterung (4h) und eine die Mündung des Lochs (4e) umschliessende Ringfläche (4k) besitzt und wobei der Halter (5, 25, 35, 45, 55, 65, 75) einen zum Anordnen im Loch (4e) des Sockels (4) bestimmten Innenteil (5a, 25a, 35a, 45a, 55a, 65a, 75a) mit einem zum Verschrauben mit dem Innengewinde (4g) des Sockels (4) bestimmten Aussengewinde (5d, 25d) sowie einen unlösbar mit dem Innenteil (5a, 25a, 35a, 45a, 55a, 65a, 75a) zusammenhängenden, zur Anordnung ausserhalb des Sockels (4) bestimmten Aussenteil (5b, 25b, 35b, 45b, 55b, 65b, 75b) aufweist, der zum Anliegen an der Ringfläche (4k) des Sockels (4) ausgebildet ist, dadurch gekennzeichnet, dass eine Hülse (6, 16, 26) mit einem axialen, durchgehenden Loch (6e, 16e, 26e) und mit einer zum Anliegen an der konischen Innenfläche (4i) des Sockels (4) vorgesehenen, konischen Aussenfläche (6a, 16a, 26a) vorhanden ist, dass der Innenteil (5a, 25a, 35a, 45a, 55a, 65a, 75a) des Halters (5, 25, 35, 45, 55, 65, 75) durch das Loch (4e) hindurch mit dem Innengewinde (4g) des Sockels (4) verschraubbar ist.

2. Vorrichtung nach Anspruch 1, dadurch gekennzeichnet, dass die konische Innenfläche (4i) des Sockels (4) und die konische Aussenfläche (6a, 16a, 26a) der Hülse (6, 16, 26) mit einer Achse (7) gleich grosse Winkel bilden, die vorzugsweise mindestens 5° sowie vorzugsweise höchstens 15° betragen.

3. Vorrichtung nach Anspruch 1 oder 2, dadurch gekennzeichnet, dass der Halter (5, 25, 35, 45, 55, 65, 75) eine zum Anliegen an der Ringfläche (4k) des Sockels (4) bestimmte Anschlagfläche (5g) besitzt und dass die Ringfläche (4k) sowie die Anschlagfläche (5g) derart ausgebildet sind, dass sie bei zusammengebauter Vorrichtung lückenlos um die Mündung des Lochs (4e) des Sockels (4) herum aneinander anliegen.

4. Vorrichtung nach Anspruch 3, dadurch gekennzeichnet, dass die Ringfläche (4k) und die Anschlagfläche (5g) bei mit dem Sockel (4) verbundenem Halter (5, 25, 35, 45, 55, 65, 75) nach aussen zu dem dem Halter (5, 25, 35, 45, 55, 65, 75) abgewandten Ende des Sockels (4) hin geneigt sind, wobei die Ringfläche (4k) sowie die Anschlagfläche (5g) mit einer Achse (7) vorzugsweise einen Winkel von mindestens 20° und vorzugsweise höchstens 70° bilden.

5. Vorrichtung nach Anspruch 3 oder 4, dadurch gekennzeichnet, dass der Halter (5, 25, 35, 45) einen an den äusseren Rand der Anschlagfläche (5g) anschliessenden, glatten Mantelflächenabschnitt (5h) aufweist, dessen axiale Abmessung mindestens 2 mm beträgt.

6. Vorrichtung nach einem der Ansprüche 1 bis 5, dadurch gekennzeichnet, dass der Halter (5, 25, 35, 45, 55, 65, 75) ausgebildet ist, um die Ringfläche (4k) des Sockels (4) bis zum äusseren Rand (4m) von dieser abzudecken und dass der Sockel (4) und der Halter (5, 25, 35, 45, 55, 65, 75) Mantelflächenabschnitte (4r, 5h) aufweisen, die bei zusammengebauter Vorrichtung beim äusseren Rand (4m) der Ringfläche (4k) aneinanderstossen, wobei die beiden aneinanderstossenden Mantelflächenabschnitte (4r, 5h) mit der Ringfläche (4k) Winkel bilden, deren Summe vorzugsweise 135° bis 180° beträgt.

7. Vorrichtung nach einem der Ansprüche 1 bis 6, dadurch gekennzeichnet, dass die Hülse (6) bei dem einen grösseren Durchmesser aufweisenden Ende ihrer konischen Aussenfläche (6a) durch Schlitze (6h) in Segmente (6i) unterteilt ist und dass der Innenteil (5a) des Halters (5) zwischen seinem Aussengewinde (5d) und dem Aussenteil (5b) des Halters (5) eine Verdickung (5e) besitzt, die einen grösseren Durchmesser als das Aussengewinde (5d) hat und ausgebildet ist, um beim Einschrauben des Halters (5) in den Sockel (4) an den Segmenten (6i) anzugreifen und diese nach aussen zu spreizen.

8. Vorrichtung nach einem der Ansprüche 1 bis 7, dadurch gekennzeichnet, dass das Loch (6e, 16e) der Hülse (6, 16) mindestens in einem Teil seiner Länge mit einem Innengewinde (6f, 16f) versehen ist, das mit dem Aussengewinde (5d) des Halters (5) verschraubbar ist.

9. Vorrichtung nach einem der Ansprüche 1 bis 8, dadurch gekennzeichnet, dass der Sockel (4), der Halter (5, 25, 35, 45, 55, 65, 75) und die Hülse (6, 16, 26) je aus einem einstückigen Körper bestehen.

10. Vorrichtung nach einem der Ansprüche 1 bis 9, dadurch gekennzeichnet, dass der Aussenteil (5b, 25b, 35b, 45b, 55b, 65b, 75b) eine in sein dem Innenteil (5a, 35a) abgewandtes Ende mündende Gewindebohrung (5m, 35m) und/oder an seinem dem Innenteil (35a, 45a, 55a, 65a, 75a) abgewandten Ende einen Mehrkant-Zapfen (35c) oder einen Kugelkopf (45i, 55i) oder einen von einer Schulterfläche (75k) wegragenden Vorsprung (75i) oder ein ferromagnetisches Magnetkupplungselement (68) aufweist.

## Claims

1. Device for fixing an artificial tooth replacement (9) to a jaw bone (1), having a base (4), intended to be fitted into a hole (1a) in the jaw bone (1), and a holder (5, 25, 35, 45, 55, 65, 75), which can be connected to the base and is intended for holding the tooth replacement (9) outside the jaw bone (1), the base (4) having an end face (4d), a hole (4e) with an opening located on the end face (4d), with an internal screw thread (4g) and with a widened section (4h) which widens from this internal screw thread to the end face (4d) and is at least in part bounded by a conical internal surface (4i), and having an annular surface (4k) which surrounds the opening of the hole (4e), and the holder (5, 25, 35, 45, 55, 65, 75) having an inner part (5a, 25a, 35a, 45a, 55a, 65a, 75a), intended to be arranged in the hole (4e) in the base (4) and with an external screw thread (5d, 25d), intended to be screwed together with the internal screw thread (4g) of the base (4), as well as an outer part (5b, 25b, 35b, 45b, 55b, 65b, 75b), irremovably joined to the inner part (5a, 25a, 35a, 45a, 55a, 65a, 75a), intended to be arranged outside the base (4) and designed to rest on the annular surface (4k) of the base (4), characterized in that there is a sleeve (6, 16, 26) with an axial through-hole (6e, 16e, 26e) and with a conical external surface (6a, 16a, 26a) intended to rest on the conical internal surface (4i) of the base (4), and in that the inner part (5a, 25a, 35a, 45a, 55a, 65a, 75a) of the holder (5, 25, 35, 45, 55, 65, 75) can be screwed, through the hole (4e), together with the internal screw thread (4g) of the base (4).

2. Device according to Claim 1, characterized in that the conical internal surface (4i) of the base (4) and the conical external surface (6a, 16a, 26a) of the sleeve (6, 16, 26) form equal angles with an axis (7), which are preferably at least 5° and at most 15°.

3. Device according to Claim 1 or 2, characterized in that the holder (5, 25, 35, 45, 55, 65, 75) has a bearing surface (5g), intended to rest on the annular surface (4k) of the base (4), and in that the annular surface (4k) as well as the bearing surface (5g) are designed in such a way that, when the device is assembled, they rest flush on one another around the opening of the hole (4e) in the base (4).

4. Device according to Claim 3, characterized in that the annular surface (4k) and the bearing surface (5g) are, when the holder (5, 25, 35, 45, 55, 65, 75) is connected to the base (4), inclined outwards with respect to that end of the base (4) which is remote from the holder (5, 25, 35, 45, 55, 65, 75), the annular surface (4k) as well as the bearing surface (5g) preferably forming an angle of at least 20° and preferably at most 70° with an axis (7).

5. Device according to Claim 3 or 4, characterized in that the holder (5, 25, 35, 45) has a smooth lateral surface portion (5h) which adjoins the outer edge of the bearing surface (5g) and has an axial dimension of at least 2 mm.

6. Device according to one of Claims 1 to 5, characterized in that the holder (5, 25, 35, 45, 55, 65, 75) is designed to cover the annular surface (4k) of the base (4) as far as the outer edge (4m) of this annular surface, and in that the base (4) and the holder (5, 25, 35, 45, 55, 65, 75) have lateral surface portions (4r, 5h) which, when the device is assembled, abut one another at the outer edge (4m) of the annular surface (4k), the two mutually abutting lateral surface portions (4r, 5h) forming angles with the annular surface (4k), the sum of which is preferably 135° to 180°.

7. Device according to one of Claims 1 to 6, characterized in that the larger-diameter end of the sleeve (6) has its conical external surface (6a) divided into segments (6i) by slits (6h), and in that the inner part (5a) of the holder (5) has a thickened section (5e) between its external screw thread (5d) and the outer part (5b) of the holder (5), this thickened section having a larger diameter than the external screw thread (5d) and being designed so that, when the holder (5) is screwed into the base (4), it acts on the segments (6i) and spreads them outwards.

8. Device according to one of Claims 1 to 7, characterized in that the hole (6e, 16e) in the sleeve (6, 16) has at least a part of its length provided with an internal screw thread (6f, 16f) which can be screwed together with the external screw thread (5d) of the holder (5).

9. Device according to one of Claims 1 to 8, characterized in that the base (4), the holder (5, 25, 35, 45, 55, 65, 75) and the sleeve (6, 16, 26) each comprise a monobloc piece.

10. Device according to one of Claims 1 to 9, characterized in that the outer part (5b, 25b, 35b, 45b, 55b, 65b, 75b) has a threaded bore (5m, 35m) opening into its end remote from the inner part (5a, 35a), and/or, at its end remote from the inner part (35a, 45a, 55a, 65a, 75a), a polygonal peg (35c) or a spherical head (45i, 55i) or a protrusion (75i) projecting away from a shoulder surface (75k) or a ferromagnetic magnetic coupling element (68).

## Revendications

1. Dispositif pour la fixation d'une prothèse dentaire (9) dans un os maxillaire (1), comportant un socle (4) destiné à être inséré dans un trou (la) ménagé dans l'os maxillaire (1), et un support (5, 25, 35, 45, 55, 65, 75) pouvant être relié au socle et destiné à tenir la prothèse dentaire (9) à l'extérieur de l'os maxillaire (9), le socle (4) comportant une face frontale (4d), un trou (4e) présentant une embouchure située du côté de la face frontale (4d), un filetage intérieur (4g), et un prolongement (4h) évasé, s'agrandissant du filetage vers la face frontale (4d), délimité au moins partiellement par une surface conique intérieure (4i), ainsi qu'une surface annulaire (4k) entourant l'embouchure du trou (4e), et le support (5, 25, 35, 45, 45, 65, 75) comportant un élément intérieur (5a, 25a, 35a, 45a, 55a, 65a, 75a) destiné à être disposé dans le trou (4e) du socle (4), présentant un filetage extérieur (5d, 25d) destiné à être vissé dans le filetage intérieur (4g) du socle, et un élément extérieur (5b, 25b, 35b, 45b, 55b, 65b, 75b) relié de façon indissociable à l'élément intérieur (5a, 25a, 35a, 45a, 55a, 65a, 75a) et destiné à être disposé à l'extérieur du socle (4), l'élément étant configuré de manière à s'appuyer sur la surface annulaire (4k) du socle (4),
caractérisé en ce qu'une douille (6, 16, 26) est prévue, qui comprend un trou axial débouchant (6e, 16e, 26e) et une surface conique extérieure (6a, 16a, 26a) destinée à venir en appui sur la surface conique intérieure (4i) du socle (4), et en ce que l'élément intérieur (5a, 25a, 35a, 45a, 55a, 65a, 75a) du support (5, 25, 35, 45, 55, 65, 75) peut être vissé dans le filetage intérieur (4g) du socle (4) à travers le trou (4e).

2. Dispositif selon la revendication 1, caractérisé en ce que la surface conique intérieure (4i) du socle (4) et la surface conique extérieure (6a, 16a, 26a) de la douille (6, 16, 26) forment des angles égaux par rapport à un axe (7), ces angles étant de préférence de 5° au minimum et de préférence de 15° au maximum.

3. Dispositif selon ta revendication 1 ou 2, caractérisé en ce que le support (5, 25, 35, 45, 55, 65, 75) comporte une surface de butée (5g) destinée à venir en appui sur la surface annulaire (4k) du socle (4), et en ce que la surface annulaire (4k) et la surface de butée (5g) sont configurées de manière telle qu'à l'état assemblé du dispositif, elles soient entièrement en contact l'une avec l'autre autour de l'embouchure du trou (4e) du socle (4).

4. Dispositif selon ta revendication 3, caractérisé en ce que la surface annulaire (4k) et la surface de butée (5g) sont inclinées vers l'extérieur, en direction de l'extrémité du socle (4), qui est opposée au support (5, 25, 35, 45, 55, 65, 75), lorsque le socle (4) et le support (5, 25, 35, 45, 55, 65, 75) sont reliés l'un à l'autre, la surface annulaire (4k) et la surface de butée (5g) formant, par rapport à un axe (7), un angle qui est de préférence de 20° au minimum et de préférence de 70° au maximum.

5. Dispositif selon la revendication 3 ou 4, caractérisé en ce que le support (5, 25, 35, 45) comporte une section d'enveloppe lisse (5h) rejoignant le bord extérieur de la surface de butée (5g), dont la dimension axiale est d'au moins 2 mm.

6. Dispositif selon l'une des revendications 1 à 5, caractérisé en ce que le support (5, 25, 35, 45, 55, 65, 75) est configuré de manière à couvrir la surface annulaire (4k) du socle (4) jusqu'au bord extérieur (4m) de cette surface, et en ce que le socle (4) et le support (5, 25, 35, 45, 55, 65, 75) comportent des sections d'enveloppe (4r, 5h) qui, à l'état assemblé du dispositif, se touchent au niveau du bord extérieur (4m) de la surface annulaire (4k), les sections d'enveloppe (4r, 5h) en contact l'une avec l'autre formant avec la surface annulaire (4k) des angles dont la somme est de préférence de 135° à 180°.

7. Dispositif selon l'une des revendications 1 à 6, caractérisé en ce qu'à hauteur de l'extrémité de sa surface conique extérieure (6a), qui présente le plus grand diamètre, la douille (6) est divisée en segments (6i) par des fentes (6h), et en ce que l'élément intérieur (5a) du support (5) comporte un renflement (5e) situé entre son filetage extérieur (5d) et l'élément extérieur (5b) du support (5), le renflement présentant un diamètre supérieur à celui du filetage extérieur (5d) et étant configuré de manière à s'engager dans les segments (6i) et à les écarter vers l'extérieur lorsque le support (5) est vissé dans le socle (4).

8. Dispositif selon l'une des revendications 1 à 7, caractérisé en ce que le trou (6e, 16e) de la douille (6, 16) est pourvu, sur une partie au moins de sa longueur, d'un filetage intérieur (6f, 16f) dans lequel peut se visser te filetage extérieur (5d) du support (5).

9. Dispositif selon l'une des revendications 1 à 8, caractérisé en ce que le socle (4), le support (5, 25, 35, 45, 55, 65, 75) et la douille (6, 16, 26) sont chacun constitués d'une pièce monobloc.

10. Dispositif selon l'une des revendications 1 à 9, caractérisé en ce que l'élément extérieur (5b, 25b, 35b, 45b, 55b, 65b, 75b) comporte un trou taraudé (5m, 35m) débouchant à l'extrémité de l'élément extérieur, qui est opposée à l'élément intérieur (5a, 35a), et/ou, à l'extrémité opposée à l'élément intérieur (35a, 45a, 55a, 65a, 75a), un tenon polygonal (35i) ou un tenon à rotule (45i, 55i) ou un prolongement (75i) saillant à partir d'une surface d'épaulement (75k) ou un élément d'accouplement ferromagnétique (68).
